# EUROPEAN PATENT APPLICATION

(11) **EP 2 196 405 A1**
(43) Date of publication of application: **16.06.2010**
(21) Application number: 08021456.2
(22) Date of filing: 10.12.2008
(51) Int. Cl.: B65D 77/22, B65D 33/01, B65D 81/20, F16K 15/14

(54) **Vacuum seal bag**

(71) Applicant: Su, Ling-Chu, Taoyuan City, Taoyuan Hsien (TW)
(72) Inventor: Su, Ling-Chu, Taoyuan City, Taoyuan Hsien (TW)
(74) Representative: Becker Kurig Straus

(57) **Abstract**

A vacuum seal bag is provided. An air extracting operation is performed after an air extracting device (5) has been aligned with and covered on a vent-hole (32,33) of a second bonding layer (3); and air in the vacuum seal bag is extracted out at the vent-hole of the second bonding layer, through an air extraction hole (10) of the vacuum seal bag, a vent-hole (21) of a first bonding layer (2), as well as a small gap (301) between the first bonding layer and glueware (30) on an interior surface of the second bonding layer. When the vacuum operation is accomplished and stops, suction force disappears; therefore, the glueware (30) on the internal surface of the second bonding layer (3) is bonded with the first bonding layer (2) more tightly by the pressure difference between ambient air and the vacuum suction in the vacuum seal bag to prevent ambient air from entering into the vacuum seal bag to achieve a sealing effect.

## Description

### BACKGROUND OF THE INVENTION

### a) Field of the Invention

The present invention relates to a vacuum seal bag, and more particularly to a vacuum seal bag which can be vacuumized directly without installing an air valve.

### b) Description of the Prior Art

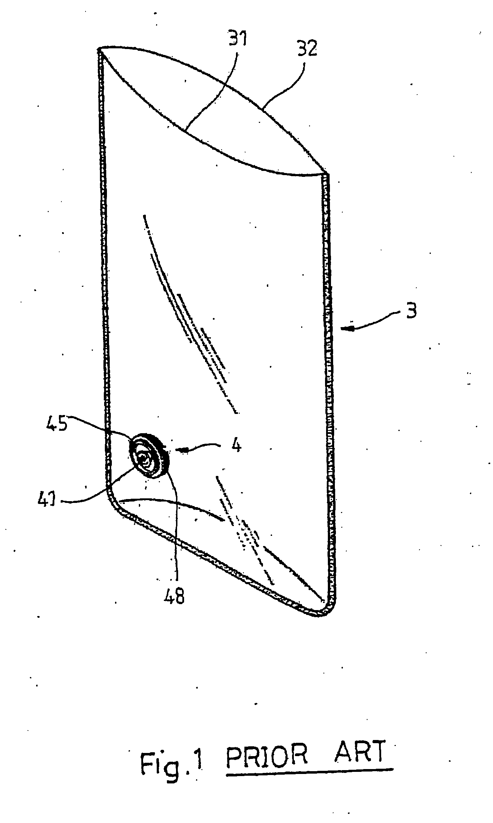

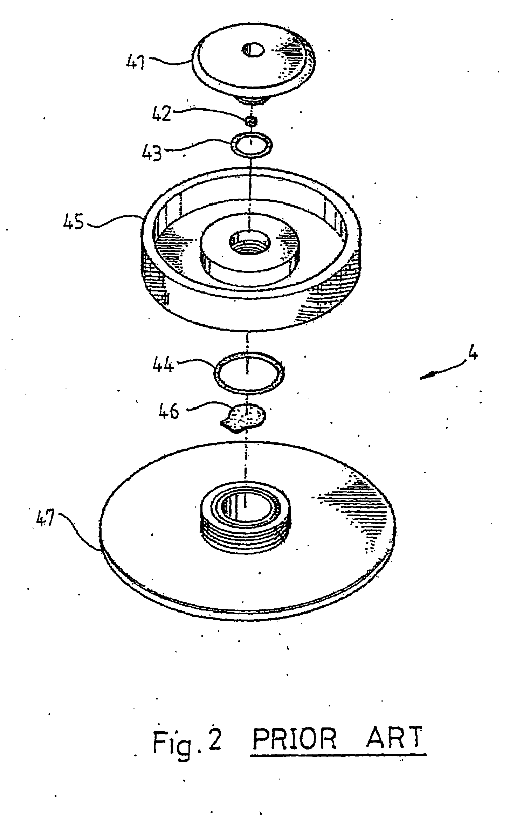

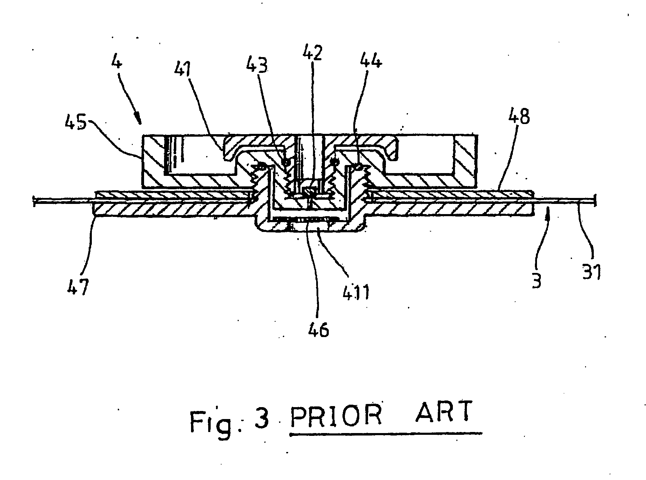

For an ordinary vacuum seal bag that is used to collect food products or goods, a pre-built through-hole on an upper membrane layer or a lower membrane layer of the bag is installed with an air valve. Next, after an opening of the bag is put in with the food products or the goods, the opening is sealed by a sealing structure, followed by aligning a nozzle of a manual or an electric air extracting device, such as a dust catcher, with the air valve of the bag to extract out the air inside the bag to achieve a vacuum state, thereby assuring that the food products or the goods that are collected can be preserved for a long time. In addition, referring to FIGS. 1 to 3, for a conventional vacuum bag 3 which is provided with an air valve, an upper membrane layer 31 is provided with the air valve 4, and the air valve 4 (as shown in FIG. 2 and FIG. 3) is constituted by an upper cap 41, a plug 42, a plurality of O-rings 43, 44, a positioning seat 45, a valve plate 46, a valve seat 47 and a gasket 48 (as shown in FIG. 3). The aforementioned conventional vacuum bag 3 that is provided with the air valve is found to have following drawbacks:
1. Upon assembling the upper cap 41, the plug 42, the O-rings 43, 44, the positioning seat 45, the valve plate 46, the valve seat 47 and the gasket 48, of the air valve 4, the upper membrane layer 31 of the bag is affected by a small space of the closest lower membrane layer 32, allowing an assembling operation to be rather troublesome that manpower and labor hours can be wasted.
2. As the air valve 4 is provided with a lot of parts, cost is increased correspondingly.
3. In using the vacuum bag 3, when the food products or the goods are put into the bag, they will be in touch with the valve seat 47 easily and therefore, it is easy to produce a gap that the vacuum function can be lost if the vacuum bag 3 is used many times repeatedly.
4. As the food products or the goods can have different shapes, when the upper and lower membrane layers 31, 32 are stretched open, it will be very inconvenient to perform an air extracting operation to vacuumize if an air suction port 411 of the upper cap 41 of the air valve 4 is to be aligned with an air extracting device (not shown in the drawings). Furthermore, if the upper cap 41 is aligned by exerting too much force, the collection, such as the food products or the goods, in the bag, can be squeezed. Even that if it is all right to squeeze the collection in the bag, the operation can still be inconvenient due to that the collection are provided with irregular shapes.

### SUMMARY OF THE INVENTION

The primary object of the present invention is to provide a vacuum seal bag that an air extracting operation can be performed after an air extracting device has been aligned with and covered on a vent-hole of a second bonding layer, and that air inside the vacuum seal bag can be extracted out at the vent-hole of the second bonding layer, through an air extraction hole of the vacuum seal bag, a vent-hole of a first bonding layer, as well as a small gap between the first bonding layer and glueware on an interior surface of the second bonding layer, by using outward suction force.

Another object of the present invention is to provide a vacuum seal bag which is provided with simple structures and can be vacuumized by directly collaborating with an air extracting device, without installing an air valve that is composed of complicated parts, thereby largely reducing manpower, labor hours and cost, correspondingly.

Still another object of the present invention is to provide a vacuum seal bag which does not occupy space relatively to facilitate storing, packaging or transporting, as it is not necessary to install an air valve.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 shows a three-dimensional view of a conventional vacuum bag.
FIG. 2 shows a three-dimensional exploded view of an air valve of a conventional vacuum bag.
FIG. 3 shows an enlarged view of a cross section of a conventional vacuum bag that is assembled.
FIG. 4 shows a three-dimensional exploded view of an embodiment of the present invention.
FIG. 5 shows a three-dimensional view of an embodiment of the present invention.
FIG. 6 shows an enlarged view of a partial cross section after an embodiment of the present invention has been aligned with an air extracting device.
FIG. 7 shows a re-enlarged view of a partial cross section of an embodiment of the present invention.
FIG. 8 shows an enlarged view of a partial cross section of an embodiment of the present invention, wherein a membrane layer is further welded with an air-guide membrane layer.
FIG. 9 shows a three-dimensional rear view of an embodiment of the present invention, wherein a membrane layer has been further welded with an air-guide membrane layer.
FIG. 10 shows a partial three-dimensional exploded view of an embodiment of the present invention, wherein a membrane layer has not been welded with an air-guide membrane layer.

### DETAILED DESCRIPTION OF THE PREFERRED EMBODIMENTS

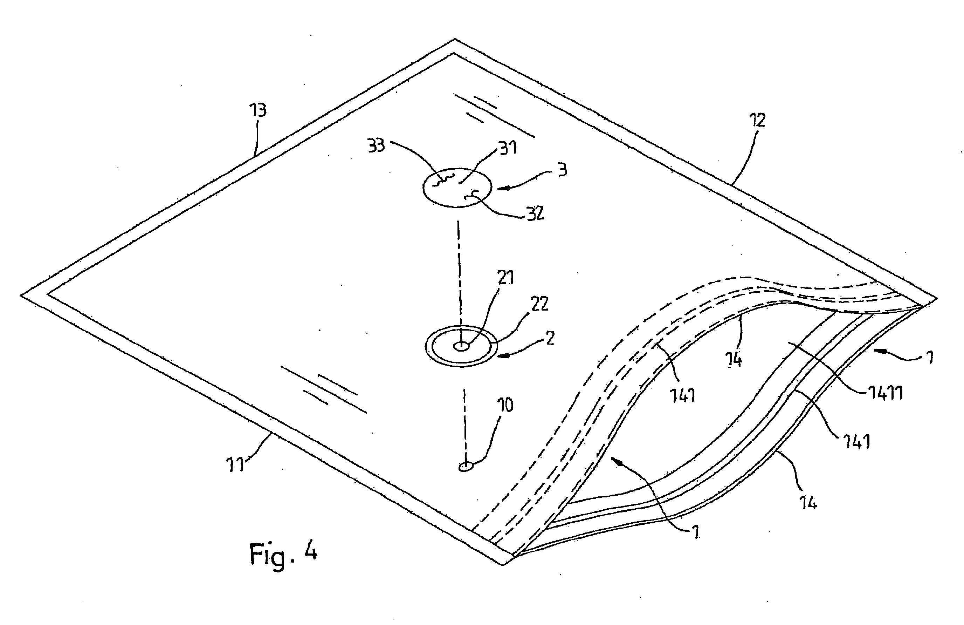

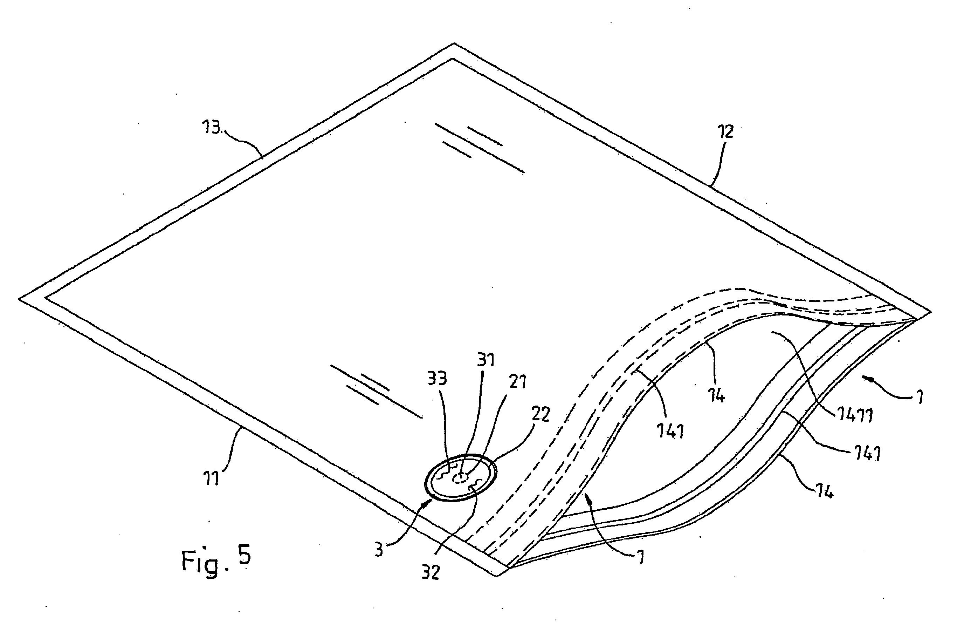

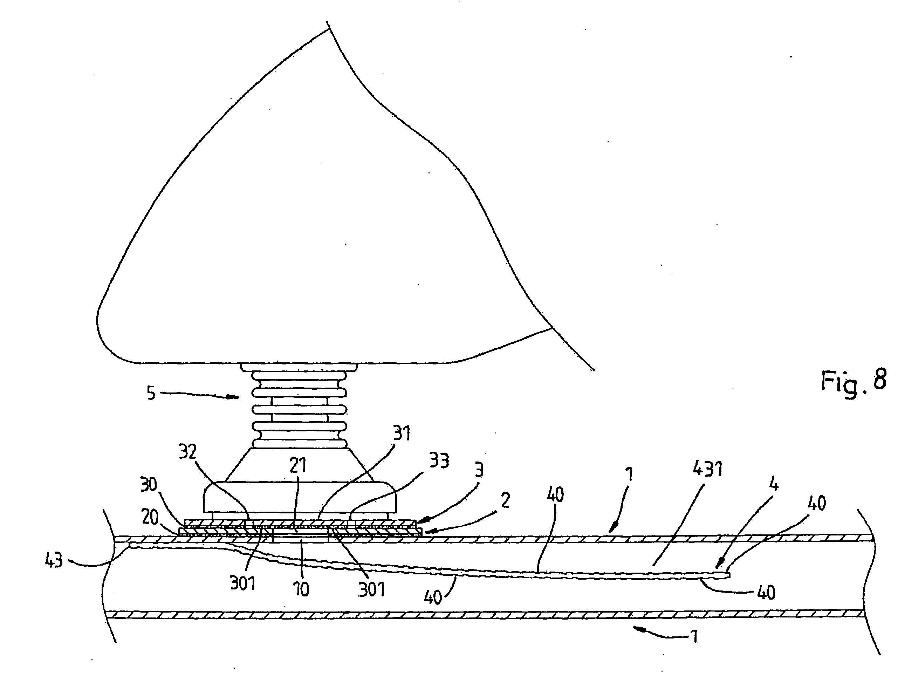

Referring to FIGS. 4 to 7, a vacuum seal bag of the present invention comprises two membrane layers 1 to form three side ends 11, 12, 13, by ultrasonic welding, high frequency welding or other welding methods; whereas, a side end 14 where the two membrane layers 1 are not welded, is provided with a sealing structure which is a zip lock set 141 in this embodiment. However, that sealing structure can also be a seal set including two parts, with each part being affixed with the other (not shown in the drawings). When the sealing structure of this embodiment, or the zip lock set 141, is opened, an opening 1411 is formed to put in food products (not shown in the drawings) or other goods; whereas, when a vacuumizing operation is to be performed, the sealing structure of this embodiment, or the zip lock set 141, is sealed, and then air in the vacuum seal bag is extracted out by an electric air extracting device 5 (as shown in FIG. 8), a manual air extracting device (not shown in the drawings) or other air extracting device such as an electric dust catcher (not shown in the drawings), through an air extraction hole 10 that is provided on the vacuum seal bag, enabling the vacuum seal bag to be in a vacuum state, which facilitates the food products or the goods to be preserved in the vacuum seal bag for a long time.

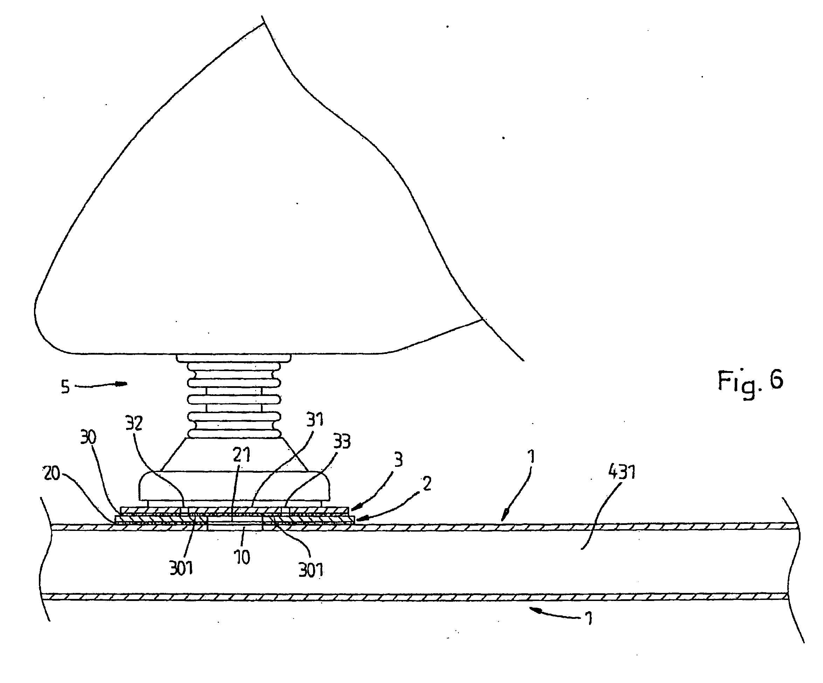

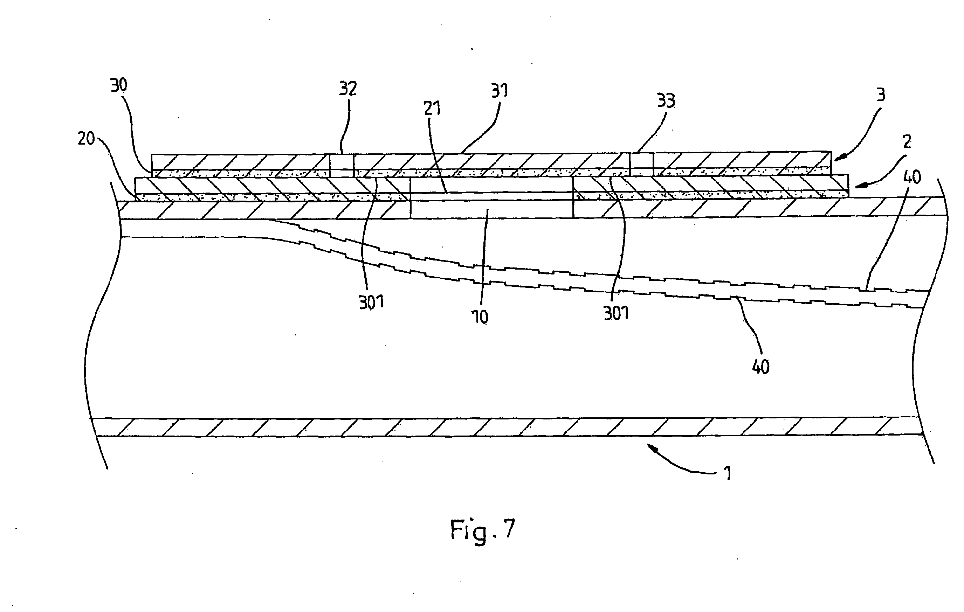

The air extraction hole 10 of one membrane layer 1 of the vacuum seal bag is affixed with a first bonding layer 2 of a small area. An interior surface of the first bonding layer 2 is provided with glueware 20 (as shown in FIG. 7) and a vent-hole 21 which is connected with the air extraction hole 10 of the aforementioned membrane layer 1. An exterior side of the first bonding layer 2 is affixed with a second bonding layer 3 of a small area, an interior surface of the second bonding layer 3 is provided with glueware 30 (as shown in FIG. 7) to facilitate bonding at an upper side of the aforementioned first bonding layer 2, and the second bonding layer 3 also includes a covering part 31 which can cover the aforementioned vent-hole 21 of the first bonding layer 2, as well as at least one vent-hole 32, 33 that is spaced with the covering part 31 by a distance. In this embodiment, the vent-holes 32, 33 are tiny wavy slot holes respectively. When the electric air extracting device 5 is aligned with and covered on the vent-holes 32, 33 of the second bonding layer 3 (as shown in FIG. 6), the air extracting operation can be performed. In addition, air inside the vacuum seal bag can be extracted out at the vent-holes 32, 33 of the second bonding layer 3, through the air extraction hole 10 of one of the aforementioned membrane layers 1, the vent-hole 21 of the first bonding layer 2, as well as a small gap 301 (as shown in FIG. 6 and FIG. 7) between the first bonding layer 2 and the glueware 30 on the interior surface of the second bonding layer 3, by using outward suction force. On the other hand, when the vacuum operation is accomplished and stops, the glueware 30 on the interior surface of the second bonding layer 3 can be bonded more tightly with the first bonding layer 3 by vacuum suction force in the vacuum seal bag, as suction force disappears. In addition, the first bonding layer 2 can be also bonded with one of the aforementioned membrane layers 1 by the glueware 20, so as to prevent ambient air from entering into the vacuum seal bag, thereby achieving a sealing effect.

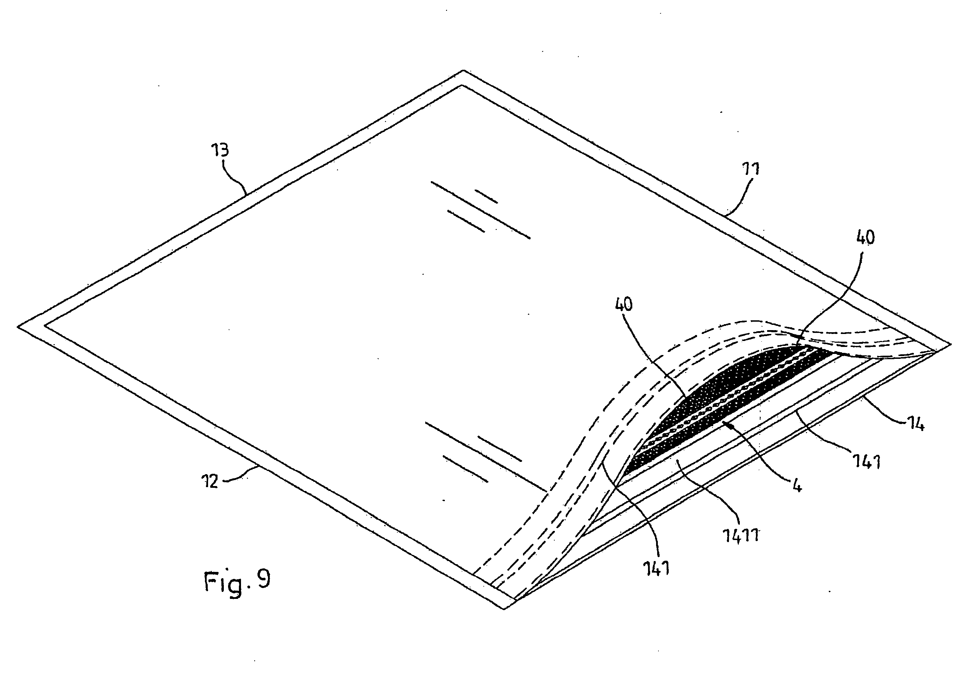

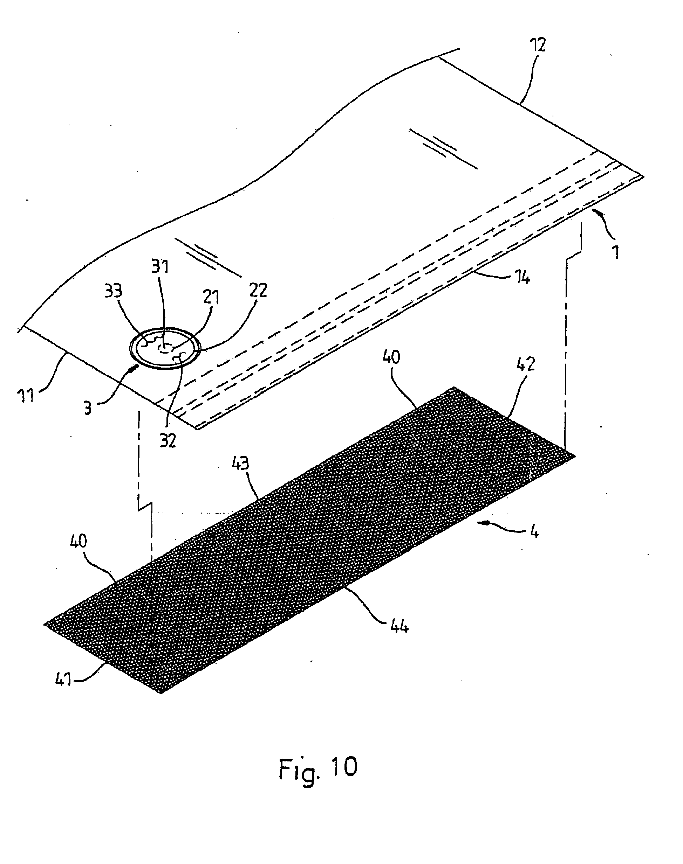

Furthermore, referring to FIGS. 8 to 10, the interior surface of one membrane layer 1 that is provided with the air extraction hole 10, for the aforementioned vacuum seal bag, can be also further welded with an air-guide membrane layer 4, which belongs to a prior art, by ultrasonic welding, high frequency welding or other welding methods. An area of that air-guide membrane layer 4 is a little smaller than that of the aforementioned membrane layer 1, and is welded with the aforementioned membrane layer 1 by three side ends 41, 42, 44 (as shown in FIG. 10); whereas, a gap 431 is formed (as shown in FIG. 8) between an inner end 43 and the aforementioned membrane layer 1, wherein, an upper and lower surfaces of the air-guide membrane layer 4 are all provided with a plurality of air-guide slots 40 which facilitate the air inside the vacuum seal bag to be extracted out more smoothly and quickly, upon extracting out the air.

On the other hand, the aforementioned first bonding layer 2 and the second bonding layer 3 are all membranes made by a plastic material.

In addition, the aforementioned first bonding layer 2 or the second bonding layer 3 can be further printed with a text (not shown in the drawings), a graph 22 or a mark, to facilitate aligning with the electric air extracting device 5, upon extracting out the air. As the second bonding layer 3 of this embodiment is made by a transparent material, the graph 22 is printed on the first bonding layer 2.

Accordingly, it is induced that the present invention is provided with following improved effects:
1. The structures are simple. The vacuum seal bag can be vacuumized by directly collaborating with the air extracting device, without installing the air valve that is constituted by complicated parts, which largely reduces manpower, labor hours and cost, correspondingly.
2. As it is not necessary to install the air valve, the vacuum seal bag does not occupy space relatively, which facilitates storing, packaging or transporting.
3. When the air extracting device is aligned with and covered on the vent-holes 32, 33 of the second bonding layer 3, the air extracting operation can be performed; and the air inside the vacuum seal bag can be extracted out at the vent-holes 32, 33 of the second bonding layer 3 by the outward suction force, through the air extraction hole 10, the vent-hole 21 of the first bonding layer 2, and then the small gap 301 between the first bonding layer 2 and the glueware 30 on the interior surface of the second bonding layer 3. On the other hand, when the vacuum operation is accomplished and stops, the glueware 30 on the interior surface of the second bonding layer 3 can be bonded more tightly with the first bonding layer 2 by the vacuum suction force in the vacuum seal bag, as the suction force disappears, which can prevent the ambient air from entering into the vacuum seal bag, thereby achieving the sealing effect.
4. Freshness of the food products in the vacuum seal bag can be preserved to avoid germs, thereby prolonging the lifetime of the food products.
5. The vacuum seal bag can be used repeatedly, thereby complying with the principle of environmental protection.

It is of course to be understood that the embodiments described herein is merely illustrative of the principles of the invention and that a wide variety of modifications thereto may be effected by persons skilled in the art without departing from the spirit and scope of the invention as set forth in the following claims.

## Claims

1. A vacuum seal bag comprising two membrane layers 1 that form three side ends 11, 12, 13 by welding, whereas a side end 14 where the two membrane layers 1 are not welded is provided with a sealing structure 141; when the sealing structure 141 is opened, an opening 1411 being formed to put in food products or other goods; when a vacuum operation is to be performed, the sealing structure 141 being sealed first, and then air being extracted out by an air extracting hole 10 provided on the vacuum seal bag, in association with an air extracting device 5, enabling the vacuum seal bag to be in a vacuum state; the air extraction hole 10 of one membrane layer 1 of the vacuum seal bag being affixed with a first bonding layer 2 of a small area, an interior surface of the first bonding layer 2 being provided with glueware 20 and being transfixed with a vent-hole 21 which is connected with the air extraction hole 10 of the aforementioned membrane layer 1; an exterior side of the first bonding layer 2 being affixed with a second bonding layer 3 of a small area, an interior surface of the second bonding layer 3 being provided with glueware 30 to facilitate bonding at an upper side of the aforementioned first bonding layer 2; the second bonding layer 3 also including a covering part 31 to cover the vent-hole 21 of the aforementioned first bonding layer 2 and more than one vent-hole 32, 33 that is spaced with the covering part 31 by a distance.

2. The vacuum seal bag according to claim 1, wherein the first bonding layer 2 and the second bonding layer 3 are membranes made by a plastic material.

3. The vacuum seal bag according to claim 1, wherein the first bonding layer 2 or the second bonding layer 3 is further printed with a text, a graph or a mark, to facilitate aligning with the air extracting device 5 upon extracting the air.

4. A vacuum seal bag comprising two membrane layers 1 that form three side ends 11, 12, 13 by welding, whereas a side end 14 where the two membrane layers 1 are not welded is provided with a sealing structure 141, one membrane layer 1 is provided with an air extraction hole 10, and an interior surface of that membrane layer 1 is welded with an air-guide membrane layer 4 of a smaller area; the air-guide membrane layer 4 being provided with three side ends 41, 42, 44, a gap being formed between an inner end 43 and the aforementioned membrane layer 1, and each of upper and lower surfaces of the air-guide membrane layer 4 being provided with a plurality of air-guide slots 40; when the sealing structure 141 is opened, an opening 1411 being formed to put in food products or other goods; when a vacuum operation is to be performed, the sealing structure 141 being sealed first, and then air being extracted out by an air extracting hole 10 provided on the vacuum seal bag, in association with an air extracting device 5, enabling the vacuum seal bag to be in a vacuum state; the air inside the vacuum seal bag being extracted out more smoothly and quickly, by the air-guide slots 40 that are provided on the upper and lower surfaces of the air-guide membrane layer 4 which is welded with one of the aforementioned membrane layers 1; the air extraction hole 10 of one membrane layer 1 of the vacuum seal bag being affixed with a first bonding layer 2 of a small area, an interior surface of the first bonding layer 2 being provided with glueware 20 and being transfixed with a vent-hole 21 which is connected with the air extraction hole 10 of the aforementioned membrane layer 1; an exterior side of the first bonding layer 2 being affixed with a second bonding layer 3 of a small area, an interior surface of the second bonding layer 3 being provided with glueware 30 to facilitate bonding at an upper side of the aforementioned first bonding layer 2; the second bonding layer 3 also including a covering part 31 to cover the vent-hole 21 of the aforementioned first bonding layer 2 and more than one vent-hole 32, 33 that is spaced with the covering part 31 by a distance.

5. The vacuum seal bag according to claim 4, wherein the first bonding layer 2 and the second bonding layer 3 are membranes made by a plastic material.

6. The vacuum seal bag according to claim 4, wherein the first bonding layer 2 or the second bonding layer 3 is further printed with a text, a graph or a mark, to facilitate aligning with the air extracting device 5 upon extracting out the air.
